Europäisches Patentamt

European Patent Office

Office européen des brevets

(19)

(11) Numéro de publication: **0 260 177 B1**

(12) **FASCICULE DE BREVET EUROPEEN**

(45) Date de publication de fascicule du brevet:
29.05.91

(51) Int. Cl.5: **G01L 23/22**, F02P 11/06

(21) Numéro de dépôt: **87401893.0**

(22) Date de dépôt: **17.08.87**

(54) **Dispositif de détection d'anomalie de combustion dans un cylindre de moteur à combustion interne à allumage commandé.**

(30) Priorité: 27.08.86 FR 8612119

(43) Date de publication de la demande:
16.03.88 Bulletin 88/11

(45) Mention de la délivrance du brevet:
29.05.91 Bulletin 91/22

(84) Etats contractants désignés:
**BE DE ES GB IT**

(56) Documents cités:

**PATENT ABSTRACTS OF JAPAN, vol. 10, no.
220 (P-482) [2276], 31 juillet 1986; & JP-A-61
57 830 (NEC HOME ELECTRONICS LTD)
24-03-1986**

(73) Titulaire: **RENAULT SPORT**
**1/15, Avenue du Président Kennedy**
**F-91170 Viry-Chatillon(FR)**

(72) Inventeur: **Kermorvant, Alex**
**Les Carreaux**
**F-91590 Cerny(FR)**

(74) Mandataire: **Saint Martin, René et al**
**Régie Nationale des Usines Renault 8 & 10,**
**avenue Emile Zola**
**F-92109 Boulogne Billancourt(FR)**

## Description

La présente invention concerne un dispositif de détection d'anomalie de combustion dans un cylindre de moteur à combustion interne à allumage commandé.

Il est connu qu'une tension continue appliquée aux électrodes d'une bougie, lorsque le milieu interélectrode est fortement ionisé par la combustion, produit un courant dit courant d'ionisation.

Ce processus met en oeuvre des phénomènes extrêmement complexes sur lesquels les théories demeurent assez vagues. En simplifiant, on peut cependant admettre que les électrons libérés par les phénomènes chimiques sont accélérés dans le champ électrostatique plus rapidement que les radicaux libres positifs de masse bien plus importante. Il se produit donc un courant dû au déséquilibre électrique : l'électrode négative tend à neutraliser les radicaux positifs par émission électronique, l'électrode positive reçoit les électrons libres accélérés dans le champ électrique.

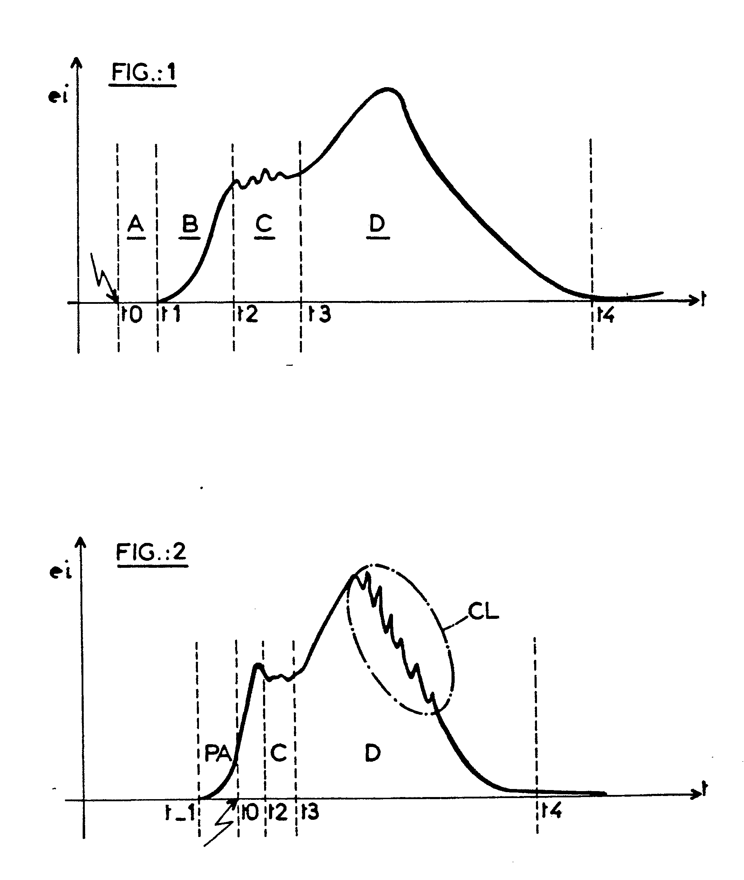

La figure 1 des dessins annexés montre l'évolution du signal d'ionisation ei en fonction du temps considéré entre l'instant d'allumage t0 et l'instant t4 de fin de la combustion. Ce signal d'ionisation peut être séparé en quatre zones :

- Une zone A où il n'apparaît aucun signal d'ionisation, la partie des gaz en combustion s'éloignant de la bougie à une vitesse supérieure à celle du front de flamme (l'allumage étant considéré comme ponctuel dans le temps) ;
- une zone B de montée du courant d'ionisation lorsque la bougie est atteinte par le front de flamme ;
- une zone C correspondant à un palier très tourmenté dû aux réactions chimiques violentes au niveau de la bougie ; et
- une zone D épousant assez fidèlement la forme de la courbe de pression dans la chambre. La forme du signal d'ionisation dans cette zone est la combinaison de l'augmentation de la densité électronique par augmentation de la pression et de la recombinaison des radicaux libres (+ et -) et des électrons.

La figure 2 montre que l'observation du signal d'ionisation permet de détecter des anomalies de combustion dans un cylindre de moteur à combustion interne.

C'est ainsi qu'un préallumage localisé près de la bougie fera apparaître un signal d'ionisation avant le point d'allumage, tandis qu'un préallumage éloigné de la bougie rendra la bosse de tension d'ionisation dans la zone 4 plus proche dans le temps du signal d'allumage engendré à l'instant t0.

Par ailleurs, le phénomène de cliquetis caractéritique d'une perturbation de l'évolution de la pression dans la chambre pendant la combustion se traduira par une perturbation en forme de dents de scie du signal d'ionisation, dans sa partie décroissante CL consécutive à la bosse de tension dans la zone D.

Le brevet US N° 4.491.110 décrit un dispositif qui exploite cette corrélation entre l'évolution de la pression dans la chambre de combustion et le signal d'ionisation. Ce dispositif est du type comprenant une bougie d'allumage comportant au moins deux électrodes, un circuit d'allumage comportant une bobine dont le secondaire est connecté en série avec les électrodes de la bougie, une source de basse tension continue pour polariser les électrodes de la bougie, un circuit de détection du courant d'ionisation engendré dans le cylindre lors de la phase de combustion, et des moyens pour découpler du circuit de détection la haute tension appliquée par le secondaire de la bobine à la bougie.

Toutefois, dans ce dispositif, le circuit de détection est connecté, en parallèle avec le secondaire de la bobine, directement à l'une des électrodes de la bougie, en l'occurrence l'électrode centrale. Ceci nécessite de recourir à une diode très haute tension (THT) connectée entre cette électrode et le circuit de détection pour éviter que la très haute tension générée par le secondaire de la bobine au moment de l'allumage ne soit appliquée au circuit de détection. Or, ces diodes THT sont onéreuses et ont l'inconvénient de présenter un encombrement important et une fiabilité douteuse tout en étant d'une utilisation délicate en raison des tensions manipulées élevées, de leur sensibilité à l'humidité et de la présence de phénomènes d'effluvage. En outre, la configuration du montage décrit au brevet américain précité nécessite d'utiliser une diode THT par bougie, ce qui grève d'autant le coût du dispositif et multiplie les sources de mauvais fonctionnement.

L'invention vise à éliminer les inconvénients précités au moyen d'un dispositif de détection d'anomalie de combustion dans un cylindre de moteur à combustion interne à allumage commandé dont le circuit de détection du courant d'ionisation est découplé de la très haute tension engendrée par le secondaire de la bobine sans faire appel à une diode THT.

A cet effet, l'invention a pour objet un dispositif du type précité dans la revendication 1 caractérisé en ce que ladite bobine présente un secondaire à faible impédance et bande passante importante connecté en série entre lesdites électrodes et ledit circuit de détection et en ce que lesdits moyens de découplage comprennent une diode anti-retour basse-tension connectée en parallèle avec ledit circuit de détection.

D'autres caractéristiques et avantages de l'invention ressortiront de la description qui va suivre de modes de sa réalisation donnés à titre d'exemple et illustrés par les dessins annexés sur lesquels :

La figure 1 est un graphique montrant en fonction du temps l'évolution du signal d'ionisation lors d'une phase normale d'allumage et de combustion du mélange dans un cylindre de moteur ;

La figure 2 est un graphique analogue à la figure 1 montrant l'évolution du signal d'ionisation en présence d'un phénomène de préallumage et d'un phénomène de cliquetis, PA et CL respectivement ;

- La figure 3 est un schéma électrique du dispositif de détection associé à une bougie unique ;

- La figure 4 est un schéma électrique du dispositif de détection associé à plusieurs bougies alimentées par distribution statique.

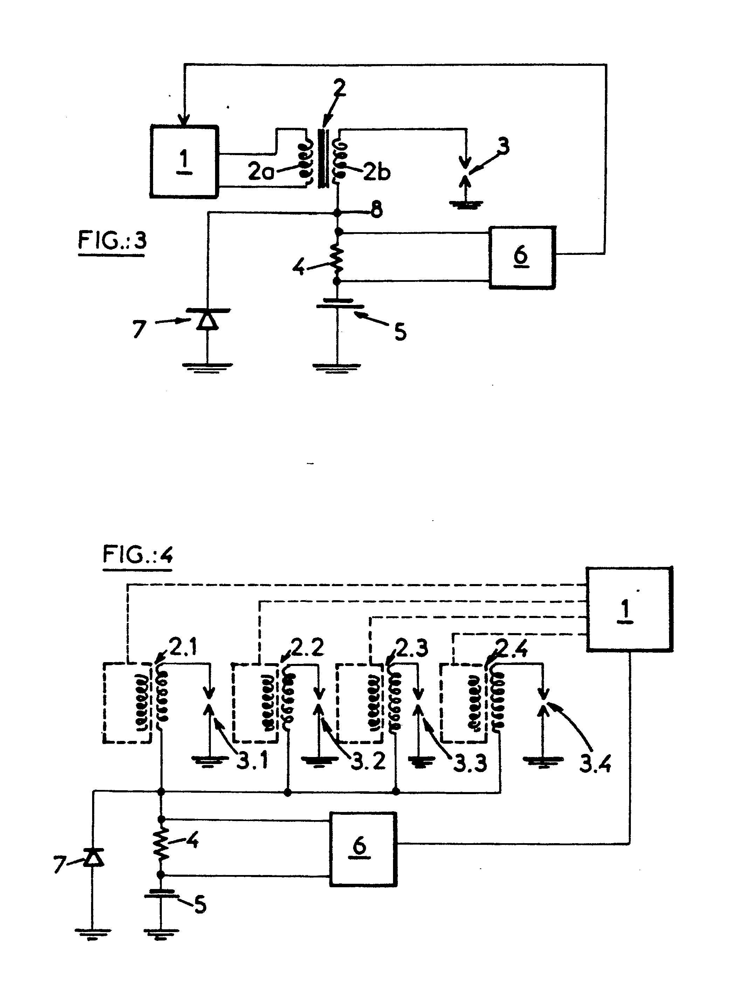

En se reportant à la figure 3, le bloc 1 désigne l'ensemble des circuits électroniques qui, en fonction des paramètres de fonctionnement du moteur, commandent la conduction du primaire 2a de la bobine 2 et l'instant d'allumage. Ces circuits électroniques qui peuvent comprendre, par exemple, des circuits analogiques d'acquisition de paramètres, un calculateur électronique et un circuit de puissance pour l'alimentation du primaire 2a, sont bien connus des spécialistes de la technique et ne seront donc pas décrits en détail.

Le secondaire 2b de la bobine est du type à faible impédance (par exemple 680Ω) et bande passante importante (de l'ordre de 40 000 Hz). Ce secondaire 2b est connecté en série entre les électrodes d'une bougie 3 et un circuit de détection comprenant le montage en série d'une résistance 4 et d'une source de basse-tension continue 5 connectée entre la résistance 4 et la masse. La résistance 4 présente une valeur de 20 kilos Ω tandis que la source 5 développe à ses bornes une tension continue de l'ordre de 2 à 300 volts. Le circuit de détection est complété par une chaîne de traitement 6 qui mesure la tension développée aux bornes de la résistance 4, effectue un certain nombre de traitements sur le signal ainsi recueilli pour déterminer, par exemple si l'on est ou non en présence d'un phénomène de cliquetis et délivre l'information correspondante au bloc 1 qui, en cas de détection de cliquetis, corrige l'angle d'avance à l'allumage dans le sens de sa diminution. En variante, l'information issue de la chaîne 6 peut être appliquée à un calculateur d'injection ou à un calculateur de gestion du circuit de suralimentation d'un moteur si ce dernier est équipé d'un ou plusieurs turbocompresseur(s). Bien entendu, ces différentes fonctions d'allumage d'injection et de gestion du circuit de suralimentation peuvent être assurées par le même calculateur. Il n'y a pas lieu ici de rentrer dans le détail de la description et du fonctionnement de la chaîne de traitement 6 car ce genre de circuit fait déjà l'objet de fabrications en grande série bien connues de l'homme de l'art.

Le dispositif de la figure 3 est complété par une diode anti-retour basse-tension 7 connectée en parallèle avec le montage en série de la résistance 4 avec la source de basse-tension 5. L'anode de la diode 7 est connectée comme le pôle négatif de la source 5 à la masse, tandis que sa cathode est connectée au point commun de la résistance 4 et du secondaire 2b de la bobine d'allumage 2 (8).

En fonctionnement, la source 5 applique en permanence une polarisation positive au point 8. Lorsque le courant est interrompu dans le primaire 2a de la bobine pour provoquer l'éclatement d'une étincelle entre les électrodes de la bougie 3, une très haute tension de l'ordre de 20 kv se développe aux bornes du secondaire 2b, avec inversion de polarité. Pendant cette phase, le circuit de détection 4, 5 et 6 est découplé de la haute tension par la diode anti-retour 7. Du fait que le secondaire 2b de la bobine a une très faible impédance, il se comporte comme un générateur de tension et le courant qui y circule est fixé par la valeur de la résistance 4 et par les phénomènes d'ionisation qui se développent dans le mélange gazeux entourant les électrodes de la bougie 3. Ce courant d'ionisation traversant la résistance 4 développe à ses bornes une tension ei représentative de la pression dans le cylindre. Cette tension est détectée par la chaîne 6 qui effectue les traitements nécessaires et délivre l'information voulue au circuit 1. Si la chaîne 6 est destinée à assurer une détection de cliquetis, elle assure des opérations classiques de filtrage, d'intégration et de comparaison à un ou plusieurs seuil(s) afin de déterminer si la tension ei détectée est représentative ou non d'un phénomène de cliquetis.

On a représenté à la figure 4 le circuit de détection 4-6 associé à un système d'allumage à distribution statique pour moteur à plusieurs cylindres. Ce système comprend comme connu en soi des bobines d'allumage 2.1, 2.2, 2.3, 2.4 associées aux bougies 3.1, 3.2, 3.3 et 3.4 respectivement. La commande séquentielle du primaire de chacune des bobines est assurée depuis le bloc 1 par des circuits électroniques, par exemple à thyristor, bien connus des spécialistes de la technique. Ici encore, une seule diode 7 et un seul circuit de détection 4-6 connectés aux secondaires des différentes bobines suffit à assurer le découplage entre la haute tension développée successivement aux bornes des différentes bobines et le circuit de détection 4-6. Avec un système d'allumage de ce type, le dispositif du brevet US précité nécessiterait également autant de diodes haute-tension que de bougies.

Il va de soi que les modes de réalisation décrits ne sont que des exemples et l'on pourrait les modifier, notamment par substitution d'équivalents techniques, sans sortir pour cela du cadre de l'invention, comme revendiquée.

## Revendications

1. Dispositif de détection d'anomalie de combustion dans au moins un cylindre de moteur à combustion interne à allumage commandé, comprenant :
   - au moins une bougie d'allumage (3) comportant au moins deux électrodes disposées dans ledit cylindre,
   - un circuit d'allumage (1, 2) comportant au moins une bobine (2) dont le secondaire (2b) est connecté en série avec les électrodes de la bougie,
   - un circuit (4-6) de détection du courant d'ionisation engendré dans le cylindre lors des phases de combustion, comportant une source de basse-tension continue (5) connectée à la bougie (3) pour en polariser les électrodes, et
   - des moyens (7) pour découpler du circuit de détection (4-6) la haute tension appliquée par le secondaire de la bobine à la bougie, caractérisé en ce que ladite bobine présente un secondaire (2b) à faible impédance et bande passante importante connecté en série entre lesdites électrodes et ledit circuit de détection (4, 6) et en ce que les moyens de découplage comprennent une diode anti-retour basse-tension (7) connectée en parallèle avec ledit circuit de détection (4).

2. Dispositif selon la revendication 1, caractérisé en ce que ledit circuit de détection comprend le montage en série d'une résistance de mesure (4) avec la source de basse-tension continue (5), et des moyens (6) de mesure de la tension aux bornes de la résistance de mesure (4).

3. Dispositif selon la revendication 2, caractérisé en ce que la résistance de mesure (4) est connectée entre le secondaire (2b) de la bobine (2) et la source de basse-tension (5) et en ce que la diode anti-retour (7) est connectée entre la masse et le point commun (8) de la résistance de mesure (4) et du secondaire (2b) de la bobine.

4. Dispositif selon la revendication 3, caractérisé en ce que la résistance de mesure (4) est connectée entre le pôle positif de la source de basse-tension (5) et le secondaire de la bobine (2b) et en ce que la cathode de la diode (7) est connectée audit point commun (8).

5. Dispositif selon l'une quelconque des revendications 1 à 4, caractérisé en ce que ledit circuit de détection (4-6) et la diode anti-retour (7) sont connectés aux secondaires d'une pluralité de bobines (2.1, 2.2, 2.3, 2.4) associées chacune à au moins une bougie (3.1, 3.2, 3.3, 3.4).

6. Application du dispositif selon l'une quelconque des revendications 1 à 5 à la détection de cliquetis, caractérisé en ce qu'il comprend des moyens (6) de traitement du signal d'ionisation (ei) engendré aux bornes de la résistance de mesure (4) et produisant une information représentative d'un phénomène de cliquetis.

## Claims

1. An arrangement for detecting a combustion anomaly in at least one controlled ignition internal combustion engine cylinder comprising:
   - at least one ignition sparking plug (3) comprising at least two electrodes disposed in said cylinder,
   - an ignition circuit (1, 2) comprising at least one coil (2) of which the secondary winding (2b) is connected in series with the electrodes of the sparking plug,
   - a circuit (4-6) for detecting the ionisation current produced in the cylinder in combustion phases, comprising a low dc voltage source (5) connected to the sparking plug (3) for biasing the electrodes thereof, and
   - means (7) for decoupling from the detecting circuit (4-6) the high voltage applied to the sparking plug by the secondary winding of the coil, characterised in that said coil has a secondary winding (2b) with a low impedance and a substantial pass band connected in series between said electrodes and said detecting circuit (4, 6) and that the decoupling means comprise a low-voltage anti-return diode (7) connected in parallel with said detecting circuit (4).

2. An arrangement according to claim 1 characterised in that said detecting circuit comprises the series assembly of a measuring resistor (4) with the low dc voltage source (5) and means (6) for measuring the voltage at the terminals of the measuring resistor (4).

3. An arrangement according to claim 2 characterised in that the measuring resistor (4) is connected between the secondary winding (2b) of the coil (2) and the low-voltage source (5) and that the anti-return diode (7) is connected between earth and the common point (8) of the measuring resistor (4) and the secondary winding (2b) of the coil.

4. An arrangement according to claim 3 characterised in that the measuring resistor (4) is connected between the positive terminal of the low-voltage source (5) and the secondary winding of the coil (2b) and that the cathode of the diode (7) is connected to said common point (8).

5. An arrangement according to any one of claims 1 to 4 characterised in that said detecting circuit (4-6) and the anti-return diode (7) are connected to the secondary windings of a plurality of coils (2.1, 2.2, 2.3, 2.4) which are each associated with at least one sparking plug (3.1, 3.2, 3.3, 3.4).

6. Use of the arrangement according to any one of claims to 5 for the detection of pinking characterised in that it comprises means (6) for processing of the ionisation signal (ei) produced at the terminals of the measuring resistor (4) and producing information representative of a pinking phenomenon.

**Ansprüche**

1. Vorrichtung zum Aufspüren von unregelmäßigen Schwankungen der Verbrennung in wenigstens einem Zylinder eines Ottomotors mit gesteuerter Zündung, mit:
   - wenigstens einer Zündkerze (3), welche wenigstens zwei in dem Zylinder angeordnete Elektroden aufweist,
   - einem Zündkreis (1, 2) mit wenigstens einer Spule (2), deren Sekundärwicklung (2b) mit den Elektroden der Kerze in Serie geschaltet ist,
   - einem Meßkreis (4-6) für den im Zylinder erzeugten Ionisationsstrom während der Verbrennungsphase, der eine Gleichstrom-Niederspannungsquelle (5) aufweist, die mit der Kerze (3) zur Polarisierung der Elektroden verbunden ist und
   - einer Anordnung (7) um vom Meßkreis (4-6) die von der Sekundärwicklung der Spule an die Kerze angelegte Hochspannung abzuschalten, dadurch gekennzeichnet, daß die Spule eine Sekundärwicklung (2b) mit geringer Impedanz und großem Durchlaßbereich aufweist, die in Serie zwischen den Elektroden und dem Meßkreis (4, 6) geschaltet ist, und daß die Abschaltanordnung eine Niederspannungs-Einwegdiode (7) aufweist, die parallel zum Meßkreis (4) geschaltet ist.

2. Vorrichtung nach Anspruch 1, dadurch gekennzeichnet, daß der Meßkreis einen Meßwiderstand (4) aufweist, der in Serie zur Gleichstrom-Niederspannungsquelle (5) geschaltet ist sowie eine Meßanordnung (6) für die Spannung an den Anschlüssen des Meßwiderstandes (4).

3. Vorrichtung nach Anspruch 2, dadurch gekennzeichnet, daß der Meßwiderstand (4) zwischen der Sekundärwicklung (2b) der Spule (2) und der Niederspannungsquelle (5) geschaltet ist und daß die Einwegdiode (7) zwischen der Masse und dem gemeinsamen Anschlußpunkt (8) des Meßwiderstandes (4) und der Sekundärwicklung (2b) der Spule geschaltet ist.

4. Vorrichtung nach Anspruch 3, dadurch gekennzeichnet, daß der Meßwiderstand (4) zwischen dem positiven Pol der Niederspannungsquelle (5) und der Sekundärwicklung (2b) der Spule geschaltet ist und daß die Kathode der Diode (7) mit dem gemeinsamen Anschlußpunkt (8) verbunden ist.

5. Vorrichtung nach einem der Ansprüche 1 bis 4, dadurch gekennzeichnet, daß der Meßkreis (4-6) und die Einwegdiode (7) mit den Sekundärwicklungen eine Vielzahl von Spulen (2.1, 2.2, 2.3, 2.4) verbunden sind, deren jede wenigstens einer Kerze (3.1, 3.2, 3.3, 3.4) zugeordnet ist.

6. Verwendung einer Anordnung nach einem der Ansprüche 1 bis 5, zum Messen des Klingelns, dadurch gekennzeichnet, daß eine Anordnung (6) zur Verarbeitung der Ionisationssignale (ei) eingesetzt wird, die an den Anschlüssen des Meßwiderstandes (4) entstehen und die eine Information erzeugen, welche für das Klingeln repräsentativ ist.

FIG.: 1

FIG.: 2

FIG.:3

FIG.:4